# EUROPEAN PATENT APPLICATION

(11) **EP 4 429 047 A1**
(43) Date of publication of application: **11.09.2024**
(21) Application number: 23305295.0
(22) Date of filing: 06.03.2023
(51) Int. Cl.: H01S 3/00

(54) **ULTRAVIOLET LASER PROCESSING SYSTEM**

(71) Applicant: Laser Systems & Solutions of Europe, 92230 Gennevilliers (FR)
(72) Inventor: PERROT, Sylvain, 75013 Paris (FR); HEINTZMANN, Martin, 92600 Asnières sur Seine (FR); VANIER, Bastien, 92500 Rueil-Malmaison (FR); BOUKSOU, Yacine, 95170 Deuil la Barre (FR); DOURI, Nabil, 92230 GENNEVILLIERS (FR); THEBAULT, Guillaume, 92230 Gennevilliers (FR)
(74) Representative: Jacobacci Coralis Harle

(57) **Abstract**

The invention relates to an ultraviolet laser processing system (1) comprising:
- a structure (100);
- a casing (200), removably mounted in the structure, comprising a laser source (202) adapted to produce a laser beam;
- a supply unit (400), mounted in the structure, and adapted to provide an electric current and a fluid to the laser source to produce the laser beam;
- an optical unit (600), mounted in the structure, adapted to shape the laser beam, the optical unit comprising a circularity correction module (620) designed to provide a variable adjustment of a circularity of the laser beam and/or an astigmatism correction module (630) designed to provide a variable adjustment of an astigmatism of the laser beam;
- an electric connector (510) adapted to conduct the electrical current from the supply unit to the laser source;
- a fluidic connector (520, 530) adapted to conduct the fluid from the supply unit to the laser source.

## Description

### TECHNICAL FIELD OF THE INVENTION

The invention relates to the field of laser system and more particularly to ultraviolet laser systems.

### BACKGROUND INFORMATION AND PRIOR ART

Laser processing systems are common manufacturing tools, for instance in the field of thermal laser annealing. A Laser processing system usually comprises a laser source adapted to produce a laser beam, a supply unit for providing power to the laser source and an optical unit adapted to shape the laser beam. It may also comprise a motion system to change the processing location on the part to be processed. The laser sources are known to emit in a narrow spectral bandwidth, and it is common knowledge to select carefully the wavelength depending on the application. For some processes, selecting a wavelength in the ultraviolet range is advantageous. For example, the absorption length can be strongly reduced, allowing a greater confinement of the process. As another example, the fact that some materials are opaque for ultraviolet light enables the process itself, as it is the case for several glasses and silicon carbide, that are transparent for visible and near infrared light.

In the case of laser processing systems working in the ultraviolet range, the laser source however suffers from a lifetime shorter than the one of the laser processing system as a whole. The short lifetime of the laser source is in particular due to the degradation of the crystal (that the laser source usually comprises) responsible for the conversion to ultraviolet light through a non-linear third harmonic generation mechanism. It is thus necessary to replace the laser source periodically during the lifetime of the ultraviolet laser processing system.

The replacement of the laser source involves a downtime, that is to say a period during which the ultraviolet laser processing system is not operational. This reduces the amount of productive time over the lifetime of the ultraviolet laser processing system, thus increasing the cost per process operation, and decreasing the yearly production capability. When replacing the laser source, it is also necessary to tune the optical unit since the characteristics of the laser beam of the new laser source are always slightly different from those of the previous laser source.

As a consequence, efforts have been made to increase the lifetime of the laser source and of the crystal in particular. However, the lifetime of the laser source remains often below 5 000 hours, while the expected lifetime of the other parts of a ultraviolet laser processing system is greater than 85 000 hours.

### SUMMARY OF THE INVENTION

In this context, one object of the invention is to provide an ultraviolet laser processing system comprising:
- a structure;
- a casing, removably mounted in the structure, comprising a laser source adapted to produce a laser beam;
- a supply unit, mounted in the structure, and adapted to provide an electric current and a fluid to the laser source to produce the laser beam;
- an optical unit, mounted in the structure, adapted to shape the laser beam, the optical unit comprising a circularity correction module designed to provide a variable adjustment of a circularity of the laser beam and/or an astigmatism correction module designed to provide a variable adjustment of an astigmatism of the laser beam;
- an electric connector adapted to conduct the electrical current from the supply unit to the laser source, the electric connector comprising a first part which is connected to the casing and a second part, fitting with said first part of the electric connector, which is connected to the supply unit;
- a fluidic connector adapted to conduct the fluid from the supply unit to the laser source, the fluidic connector comprising a first part which is connected to the casing and a second part, fitting with said first part of the fluidic connector, which is connected to the supply unit.

Thanks to the ultraviolet laser processing system according to the invention, the downtime is greatly reduced.

Firstly, the laser source being mounted in a casing, physically swapping a previous laser source (that needs to be replaced) to the (new) laser source is fast. Indeed, it is sufficient to place the casing in the appropriate position within the structure and to connect both parts of each connector to power up the laser source. In addition, connectors allow to quickly disconnect the laser source when it needs to be replaced.

Secondly, adjusting the optical line to the characteristics of the beam produced by the laser source is performed easily by means of the optical unit. The astigmatism and the circularity of the laser beam are significant parameters for many applications of ultraviolet laser processing systems, in particular when high spatial precision is required. Advantageously, those parameters can be tuned to reference values thanks to the variable adjustment provided by the astigmatism correction module or the circularity correction module.

Consequently, even though the ultraviolet laser processing system according to the invention may be more complex, and thus more costly, than common ultraviolet laser processing systems, the replacement of its laser source is faster. The ultraviolet laser processing system according to the invention is thus profitable over the long term as compared with common ultraviolet laser processing systems.

Other advantageous and non-limiting features of the ultraviolet laser processing system according to the invention are:
- the ultraviolet laser processing system further comprising a drawer, slidably mounted to the structure, arranged to support the casing;
- the drawer is located at a distance inferior to 1.5 m from a lower part of the structure on which the ultraviolet laser system is designed to stand;
- the drawer is mounted to the structure such that connecting the first part and the second part of the electric connector and the first part and the second part of the fluidic connector is only feasible when the drawer supporting the casing is slid into the structure;
- the circularity correction module and/or the astigmatism correction module comprises a beam expander which comprises cylindrical lenses;
- the beam expander comprises three cylindrical lenses, two of the three cylindrical lenses being movable along a propagation axis of the laser beam and one of the three cylindrical lenses being fixed along the propagation axis;
- the optical unit further comprises at least one of the following: a position and pointing correction module designed to provide a variable adjustment of a position and/or a direction of the laser beam; a size and focus correction module designed to provide a variable adjustment of a diameter and of a divergence of the laser beam; a deformable mirror designed to provide a variable adjustment of a phase profile of the laser beam;
- the first part and the second part of the electric connector are designed to fit together by clipping and wherein the first part and the second part of the fluidic connector are designed to fit together by clipping;
- the electric connector is a multi-pin connector;
- the fluidic connector comprises a check valve;
- the ultraviolet laser processing system further comprises a wavefront sensor which is adapted to measure optical characteristics of the laser beam.

The invention also concerns a method of assembling the ultraviolet laser processing system comprising the steps of:
- installing the casing into the structure;
- connecting the first part and the second part of the electric connector;
- connecting the first part and the second part of the fluidic connector;
- adjusting the circularity of the laser beam by means of the circularity correction module and/or adjusting the astigmatism of the laser beam by means of the astigmatism correction module.

Other advantageous and non-limiting features of the method according to the invention are:
- the method further comprises a step of performing a measurement, after the laser beam being shaped by the optical unit, of the astigmatism and/or the circularity of the laser beam, and adjusting the circularity of the laser beam and/or adjusting the astigmatism of the laser beam is respectively performed based on the measurement;
- installing the casing into the structure comprises lifting the casing by means of a lifting tool, placing the casing onto a drawer, and sliding the drawer into the structure.

### DETAILED DESCRIPTION OF EXAMPLE(S)

The following description, enriched with joint drawings that should be taken as non-limitative examples, will help understand the invention and figure out how it can be realized.

On the appended drawings:
- figure1 is a schematic cut-view of an ultraviolet laser processing system according to the invention;
- figure 2 is a perspective view of an example of a casing included in the ultraviolet laser processing system of figure 1, the casing comprising a laser source and being mounted on a drawer;
- figure 3 is a block-diagram of a sequence of steps allowing assembling the ultraviolet laser processing system of figure 1.

The ultraviolet laser processing system 1, hereafter referred to as the system 1, is here a manufacturing tool. For example, it can be used to perform a thermal annealing process at the surface of semiconductors wafers. As another example, it can be used to drill holes in printed circuit board. It can also be used to engrave materials such as glass or silicon carbide.

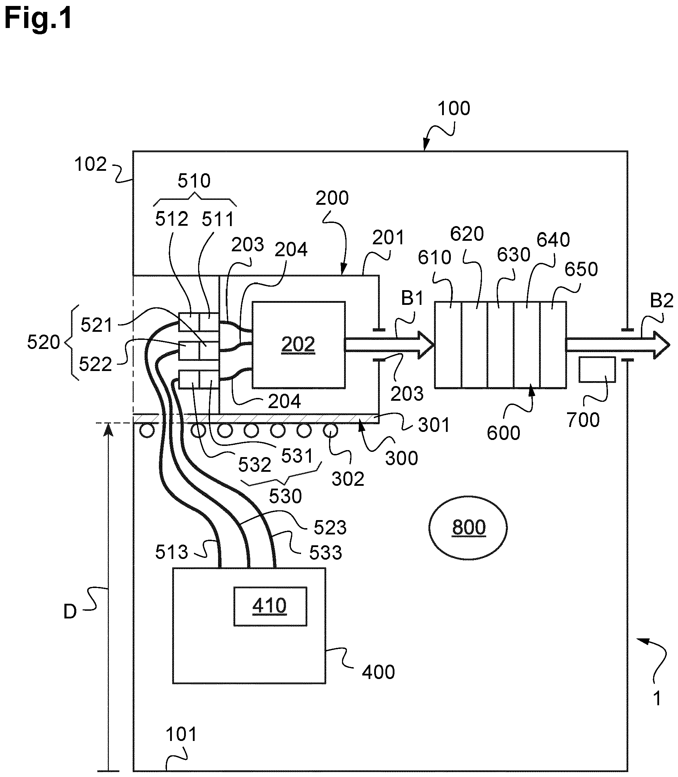

The system 1 comprises a structure 100. As represented in figure 1, the structure 100 is designed to carry the other elements of the system 1. The structure 100 for instance comprises metal rods, attached to each other, and external walls 102. The structure 100 has a bottom 101, that is to say a lowest part, onto which the system 1 stands. Put differently, the bottom 101 of the structure 100 is placed on the ground.

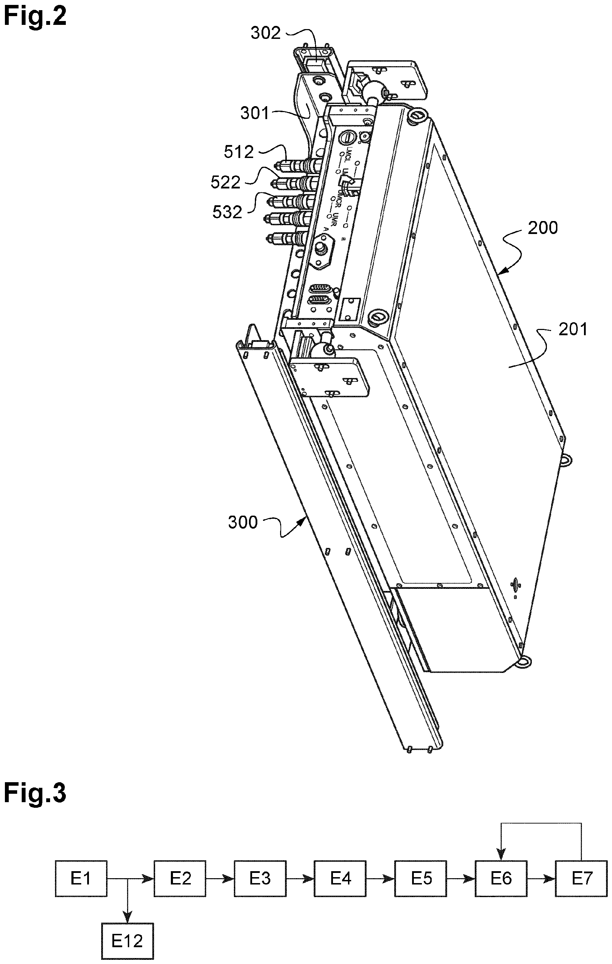

The system 1 also comprises a casing 200 which is removably mounted in the structure 100, i.e. with respect to the structure 100, in the sense that it is attachable to and detachable from the structure 100. The casing 200 comprises a housing 201 and a laser source 202 adapted to produce a laser beam. The housing 201 globally forms an enclosed box, as illustrated in figure 2, in which the laser source 202 is located. The housing 201 provides in particular protection for the laser source 202. The housing 201 has at least one opening 203 for the passage of the laser beam. In figure 1, the laser beam coming out of the casing 200 through said opening 203 is referenced B1 (until it enters the optical unit described later on).

Classically, the laser source 202 comprises a first laser unit that emits in the infrared range, and a conversion unit that converts the infrared light in the visible and then in the ultraviolet range. The infrared laser can be based on a neodymiumdoped yttrium aluminum garnet (Nd:YAG) placed in a resonant optical cavity. The wavelength conversion is classicaly obtained by using a non-linear effect in specific crystals such as potassium dihydrogenphosphate (KDP) and lithium triborate LBO.

As a variation, the laser source can comprise a combination of a laser diode and a fiber amplifier. The fiber amplifier can be based on an Ytterbium doped fiber.

Here, the laser source 202 is adapted to emit light in the ultraviolet range. The wavelengths produced by the laser source 202, and thus those of the laser beam B1, are for instance comprised between 250 nm and 360 nm. Preferably, the system 1 is designed for thermal annealing and the wavelengths produced by the laser source 202 range from 260 nm to 360 nm. The laser beam B1 produced by the source 202 is for instance producing pulses at 355 nm with a repetition rate greater than 40 MHz and a pulse duration shorter than 2 ns. Here, the casing 200 also comprises a polarizer to select the polarization of the laser beam B1.

As shown in figure 1, the system 1 comprises a drawer 300, slidably mounted to the structure 100. The drawer 300 is arranged to support the casing 200. The drawer 300 for instance comprises a floor 301, for instance a plate or a tray, and rolling means 302 which maintains the floor 301 with respect to the structure 100 in a movable manner.

The drawer 300 is more particularly slidable between an external position wherein the floor 301 extends away from the external walls 102 of the structure 100 so that the casing 200 may be placed on the floor 301, and an internal position wherein the floor 301 is located inside the structure 100 such that the casing 200 is in a working position, which corresponds to its position when the system 1 is being used. Preferentially, when the drawer 300 is in the external position, the casing 200 supported by the floor 301 of the drawer 300 is located completely outside of the structure 100, which simplifies the removing of the casing 200.

Advantageously, the drawer 300, and more specifically the floor 301 of the drawer 300, is located at a distance D inferior to 1.5 m from the bottom 101 of the structure 100. In this way, an operator installing the casing 200 onto the floor 301 of the drawer 300 can stand directly on the ground and does not need to work at height, which improves its safety.

The system 1 also comprises a supply unit 400, mounted in the structure 100, and adapted to provide an electric current and a fluid to the laser source 202 to produce the laser beam B1. The supply unit 400 is more particularly adapted to provide to the laser source 202, in addition to the electric current, at least a gas such as clean dry air or nitrogen and/or a fluid such as water or glycol. The gas may be used to purge the casing 200 and avoid the contamination of the optical elements. The fluid may be used to keep the laser source at a steady temperature by evacuating heat.

The supply unit 400 may also comprise a power control module 410 adapted to adjust the power provided to the laser source 202 by the electric current. The power control module 410 thus allows adjusting, i.e. setting, the energy density of the laser beam. Such an adjustment is typically based on the use of the system 1.

The system 1 comprises connectors connecting the supply units 400 to the laser source 202. As represented in figure 1, the system 1 comprises: an electrical connector 510 adapted to conduct the electrical current from the supply unit 400 to the laser source 202; a gas connector 520 adapted to conduct the gas from the supply unit 400 to the laser source 202; a liquid connector 530 adapted to conduct the liquid from the supply unit 400 to the laser source 202.

Each connector 510, 520, 530 comprises a first part 511, 521, 531 connected to the casing 200 and a second part 512, 522, 532 connected to the supply unit 400. For each connector 510, 520, 530, its first part 511, 521, 531 is designed to fit with, i.e. to be connected with, its second part 512, 522, 532.

Here, as represented in figures 1 and 2, the first parts 511, 521, 531 of the connectors 510, 520, 530 are directly attached to the casing 200. The casing 200 then comprises wires 203 and tubes 204 to conduct the electric current, the gas, and the liquid to the laser source 202. As a variation, the first parts may be connected to the casing via wires or tubes such that their positions are flexible with respect to the casing.

The electrical connector 510 comprises a flexible wire 513 electrically connecting its second part 512 to the supply unit 400. The gas connector 520 comprises a flexible tube 523 fluidically connecting its second part 522 to the supply unit 400. The liquid connector 530 comprises another flexible tube 533 fluidically connecting its second part 532 to the supply unit 400. In this way, the second parts 512, 522, 532 of the connectors 510, 520, 530 are bought to the first parts 511, 521, 531 of the connectors 510, 520, 530 for connection.

Here, the first parts 511, 521, 531 and the second parts 512, 522, 532 of the connectors 510, 520, 530 are designed to fit together by clipping. In other words, the first parts 511, 521, 531 and the second parts 512, 522, 532 have respective shapes which are designed to interlock to establish the connections between them. This means in particular that the first parts and the second parts do not fit together by screwing. Advantageously, this allows to connect them together quickly and easily, and thus to connect the supply unit 400 to the casing 200 quickly and easily.

The electric connector 510 is for instance a multi-pin connector or a connector presenting a sub-d format, a circular format, or a rectangular format.

The liquid connector 530 comprises a check valve. In this way, the liquid connector 530 does not leak when the second part 532 is detached from the first part 532. The check valve for instance comprises a ball or a disc which is springloaded against a channel of the check valve. The gas connector 520 may also comprise a check valve such that the gas does not leak when the second part 522 is detached from the first part 512. Preferentially, the gas connector 520 is seal-free which makes connecting the first part 521 and the second part 522 fast.

Advantageously, the first parts 511, 521, 531 and the second parts 512, 522, 532 of the connectors 510, 520, 530 can only be fasten together when the drawer 300 is in the internal position. In other words, the drawer 300 is mounted to the structure 100 such that connecting the first part 511 and the second part 512 of the electric connector 510, the first part 521 and the second part 522 of the gas connector 520 and the first part 531 and the second part 532 of the liquid connector 532 is only feasible when the drawer 300 supporting the casing 200 is slid into the structure 100.

As figure 1 shows it, the system 1 also comprises an optical unit 600, mounted in the structure 100 and adapted to shape the laser beam B1. The optical unit 600 comprises a plurality of modules designed to adjust the output optical line, that is to say the optical characteristics of the laser beam, hereafter referred to as characteristics, coming out of the system 1. After being shaped by the optical unit 600, the laser beam is referenced B2 in figure 1. The characteristics of the laser beam are here physical features representative of the shape and propagation of the laser beam. Those characteristics here comprise: a position, a direction, a diameter, an ellipticity, a divergence and an astigmatism of the laser beam.

The optical unit 600 comprises a position and pointing correction module 610 designed to provide a variable adjustment of the direction and/or the position of the laser beam. The position and pointing correction module 610 comprises two motorized mirrors and two position sensors. This module allows setting the position and/or direction of the laser beam to reference values. Here, adjusting the direction means orientating the laser beam, for instance rotating it, and adjusting the position means shifting the laser beam, for instance translating it. The position and pointing correction module 610 may for instance shift the laser beam by a distance comprised between 1 µm and 5 mm and deviate the laser beam by 0.001 mrad to 50 mrad. The position and pointing correction module 610 is the first module to adjust the characteristics of the laser beam. In other words, the laser beam B1 first enter the position and pointing correction module 610.

For each module of the optical unit 600, the term "variable adjustment" means that the module is adapted to adjust a characteristic of the laser beam to a value and that this value may vary, in the sense that is can be selected among several values, by opposition to a fixed value. Put differently, the term "variable adjustment" means that the module allows dynamically tunning a characteristic of the laser beam. This variable adjustment is for example commanded and/or controlled by a processing unit 800.

The optical unit 600 comprises a circularity correction module 620 designed to provide a variable adjustment of the circularity of the laser beam. The circularity correction module 620 comprises a beam expander which comprises cylindrical lenses. The circularity correction module 620 allows setting the ellipticity of the laser beam to a reference value. Advantageously, the beam expander of the circularity correction module 620 comprises three cylindrical lenses, two of the three cylindrical lenses being movable along a propagation axis of the laser beam and one of the three cylindrical lenses being fixed along the propagation axis. The cylindrical lenses of the circularity correction module 620 for instance have a focal lens comprised between -1000 mm and +1000 mm and are movable in translation over a length comprised between 0.1 mm and 250 mm. The circularity correction module 620 is for instance adapted to set the circularity of the laser beam to a value comprised between 85% and 100%*. The circularity correction module 620 is the second module to adjust the characteristics of the laser beam, i.e. to be traversed by the laser beam.

The optical unit 600 comprises an astigmatism correction module 630 designed to provide a variable adjustment of the astigmatism of the laser beam. The astigmatism correction module 630 comprises a beam expander which comprises cylindrical lenses. The astigmatism correction module 630 allows setting the astigmatism of the laser beam to a reference value. Advantageously, the beam expander of the astigmatism correction module 630 comprises three cylindrical lenses, two of the three cylindrical lenses being movable along the propagation axis of the laser beam and one of the three cylindrical lenses being fixed along the propagation axis. The cylindrical lenses of the astigmatism correction module 630 for instance have a focal lens comprised between -1000 mm and +100 mm and are movable in translation over a length comprised between 0.1 mm and 250 mm. The astigmatism correction module 630 is for instance adapted to set the astigmatism of the laser beam to a value comprised between -1 lambda and +1 lambda, where lambda is the value of the wavelength and where the astigmatism is characterized as a wavefront deviation. The astigmatism correction module 630 is the third module to adjust the characteristics of the laser beam, i.e. to be traversed by the laser beam. As a variation, the order of the astigmatism correction module and of the circularity correction module may be inverted.

The optical unit 600 comprises a size and focus correction module 640 designed to provide a variable adjustment of the diameter and of the divergence of the laser beam. The size and focus correction module 640 allows setting the diameter and the divergence of the laser beam to reference values. The size and focus correction module 640 comprises a beam expander which comprises three spherical lenses, two of the three spherical lenses being movable along the propagation axis of the laser beam and one of the three spherical lenses being fixed along the propagation axis. The size and focus correction module 640 is the forth module to adjust the characteristics of the laser beam, i.e. to be traversed by the laser beam.

As shown in figure 1, the optical unit 400 preferably comprises another position and pointing correction module 650 for compensating the effect of the other preceding modules on the direction and/or position of the laser beam, in particular of the circularity correction module 620, the astigmatism correction module 630, the size and focus correction module 640. The other position and pointing correction module 650 typically deviates the laser beam by a value inferior to 0.5 mrad. The other position and pointing correction module 650 is the fifth module to adjust the characteristics of the laser beam, i.e. to be traversed by the laser beam.

By means of the two position and pointing correction modules 610, 650, the direction and position of the laser beam B2 when it comes out of the optical unit 400, may be render independent of the direction and position of the laser beam B1 when it enters the optical unit 400.

Preferentially, the optical unit 400 comprises at least one deformable mirror (not represented) designed to provide a variable adjustment of a phase profile of the laser beam. The deformable mirrors are more particularly used to adjust the higher orders of the phase variation, such as coma, spherical aberrations or trefoil.

Preferentially, the system 1 also comprises at least one wavefront sensor 700 which is adapted to measure the characteristic of the laser beam B2 coming out of the optical unit 600. In this way, the wavefront sensor 700 gives feedback to the optical unit 600 for adjusting the characteristic of the laser beam B2. Preferentially, a beam profiler is also used in addition to the wavefront sensor to provide an intensity profile with higher resolution and accuracy.

Here, the system 1 also comprises the processing unit 800 which comprises at least one memory and one processor. The processing unit 800 is programmed to command the emission of the laser beam B2.

In a remarkable way, the system 1 may be quickly assembled, which allows reducing the downtime of the system 1. A method of assembling the system 1 comprises the main steps of:
- installing the casing 200 into the structure 100;
- connecting the first parts 511, 521, 531 and the second parts 512, 522, 532 of the connectors 510, 520, 530;
- adjusting the characteristics of the laser beam B2 by means of the optical unit 400.

As shown in figure 3, the method starts with a step E1 of pulling out the drawer 300. At the end of step E1 the drawer is fully deployed in the external position.

The method then continues with a step E2 of installing the casing 200 onto the floor 301. Step E2 is preferentially performed by means of a lifting tool as the mass of the casing 200 is for instance comprised between 25 kg and 80 kg. Advantageously, the drawer 300 being in the external position allows bringing the lifting tool close to the floor 301.

The method then comprises a step E3 of sliding the drawer 300, supporting the casing 200, into the structure 100 to the internal position.

In a step E4 of the method, the first parts 511, 521, 531 and the second parts 512, 522, 532 of the connectors 510, 520, 530. At this point, connections are possible since the drawer 300 is in the internal position. This security prevents alimenting the laser source 202 when the casing is not in its working position.

Step E4 comprises in particular: clipping together the first part 511 and the second part 512 of the electric connector 510; clipping together the first part 521 and the second part 522 of the gas connector 520; clipping together the first part 531 and the second part 532 of the liquid connector 530.

The method then comprises a step E5 wherein the laser source 202 is turned-on. Step E5 comprises more specifically providing the electric current, the gas and the liquid to the laser source 202 such that it produces the laser beam B1.

The method continues with a step E6 of performing a measurement, here by means of the beam profiler and a wavefront sensor 700, of the characteristics (position, direction, diameter, ellipticity, divergence and astigmatism) of the laser beam B2 coming out of the optical unit 600. Step E6 also comprises comparing the characteristics of the laser beam B2 to reference values.

The method then comprises a step E7 of adjusting the characteristics of the laser beam B2, i.e. of shaping the laser beam. This step is performed by means of the optical unit 600. In particular, each module of the optical unit 600 may adjust one or more characteristics of the laser beam based on the comparison performed in step E6. The position and pointing correction module 610 and the other position and pointing correction module 650 may adjust the direction and the position of the laser beam B2. The circularity correction module 620 may adjust the circularity of the laser beam B2. The astigmatism correction module 630 may adjust the astigmatism of the laser beam B2. The size and focus correction module 640 may adjust the diameter and of the divergence of the laser beam B2.

As figure 3 shows it, steps E6 and E7 are preferentially performed in a loop in order to fine-tune the characteristics of the laser beam B2.

Preferentially, steps E5, E6 and E7 are performed by the processing unit 800, the memory comprising instructions which, when executed by the processor, cause the processing unit 800 to carry out steps E5, E6 and E7. Steps E5, E6 and E7 may thus be automated. The reference values above mentioned are for instance predetermined based on the use of the system 1.

The system 1 also allows swapping or exchanging a previous laser source (that needs to be replaced) to the (new) laser source 202 quickly. A method of replacing a previous laser source of the system 1 comprises, in addition to steps E1 to E6 of the assembling method, a step E12 of removing a previous casing comprising the previous laser source. The step E12 of removing a previous casing is performed after step E1 and before step E2. Thus, swapping the previous laser source to the laser source 202 is easily performed by swapping the previous casing to the casing 200.

The previous casing (comprising the previous laser source) is similar to the casing 200 (comprising the laser source 202). The connections between the previous casing and the supply unit 400 being similar to the ones between the casing 200 and the supply unit 400, disconnecting the previous casing is fast since the connections are based on clipping.

However, the characteristics of the laser beam coming out of the casing 200 might differ from the ones of the laser beam coming out of the previous casing (produced by the previous laser source). Thus, steps E6 and E7 allow to maintain the characteristics of the laser beam produced by the system 1 (i.e. the laser beam coming out of the optical unit 600) despite a change of laser source.

The system 1 may also comprise holding means adapted hold a part to be processed by the laser beam B2 and motion means adapted to change the processing location on the part to be processed, i.e. the surface of the part illuminated by the laser beam B2.

The present invention is by no means limited to the embodiment described and represented in the figures, but the person skilled in the art will know how to make any variant in accordance with the invention.

For example, the circularity correction module and the astigmatism correction module are the most critical modules of the optical unit since the astigmatism and the circularity of the laser beam are significant parameters for many applications of the ultraviolet laser processing system, in particular when high spatial precision is required. The other modules, in particular the position and pointing correction modules and the size and focus correction module, as well as the deformable mirrors may be regarded as optional.

## Claims

1. Ultraviolet laser processing system (1) comprising:
- a structure (100);
- a casing (200), removably mounted in the structure (100), comprising a laser source (202) adapted to produce a laser beam;
- a supply unit (400), mounted in the structure (100), and adapted to provide an electric current and a fluid to the laser source (202) to produce the laser beam;
- an optical unit (600), mounted in the structure (100), adapted to shape the laser beam, the optical unit (600) comprising a circularity correction module (620) designed to provide a variable adjustment of a circularity of the laser beam and/or an astigmatism correction module (630) designed to provide a variable adjustment of an astigmatism of the laser beam;
- an electric connector (510) adapted to conduct the electrical current from the supply unit (400) to the laser source (202), the electric connector (510) comprising a first part (511) which is connected to the casing (200) and a second part (512), fitting with said first part (511) of the electric connector (510), which is connected to the supply unit (400);
- a fluidic connector (520, 530) adapted to conduct the fluid from the supply unit (400) to the laser source (202), the fluidic connector (520, 530) comprising a first part (521, 531) which is connected to the casing (200) and a second part (522, 532), fitting with said first part (521, 531) of the fluidic connector (520, 530), which is connected to the supply unit (400).

2. Ultraviolet laser processing system (1) according to claim 1, further comprising a drawer (300), slidably mounted to the structure (100), arranged to support the casing (200).

3. Ultraviolet laser processing system (1) according to claim 2, wherein the drawer (300) is located at a distance inferior to 1.5 m from a lower part (101) of the structure (100) on which the ultraviolet laser system (1) is designed to stand.

4. Ultraviolet laser processing system (1) according to claim 3 or 4, wherein the drawer (300) is mounted to the structure (100) such that connecting the first part (511) and the second part (512) of the electric connector (510) and the first part (511, 521) and the second part (522, 532) of the fluidic connector (520, 530) is only feasible when the drawer (300) supporting the casing (200) is slid into the structure (100).

5. Ultraviolet laser processing system (1) according to any one of claims 1 to 4, wherein the circularity correction module (620) and/or the astigmatism correction module (630) comprises a beam expander which comprises cylindrical lenses.

6. Ultraviolet laser processing system (1) according to claim 5, wherein the beam expander comprises three cylindrical lenses, two of the three cylindrical lenses being movable along a propagation axis of the laser beam and one of the three cylindrical lenses being fixed along the propagation axis.

7. Ultraviolet laser processing system (1) according to any one of claims 1 to 6, wherein the optical unit (600) further comprises at least one of the following:
- a position and pointing correction module (610, 650) designed to provide a variable adjustment of a position and/or a direction of the laser beam;
- a size and focus correction module (640) designed to provide a variable adjustment of a diameter and of a divergence of the laser beam;
- a deformable mirror designed to provide a variable adjustment of a phase profile of the laser beam.

8. Ultraviolet laser processing system (1) according to any one of claims 1 to 7, wherein the first part (511) and the second part (512) of the electric connector (510) are designed to fit together by clipping and wherein the first part (511, 521) and the second part (522, 532) of the fluidic connector (520, 530) are designed to fit together by clipping.

9. Ultraviolet laser processing system (1) according to any one of claims 1 to 8, wherein the electric connector (510) is a multi-pin connector.

10. Ultraviolet laser processing system (1) according to any one of claims
1 to 9, wherein the fluidic connector (520, 530) comprises a check valve.

11. Ultraviolet laser processing system (1) according to any one of claims 1 to 10, further comprising a wavefront sensor (700) which is adapted to measure optical characteristics of the laser beam.

12. Method of assembling an ultraviolet laser processing system (1) according to any one of claims 1 to 11, the method comprising the steps of:
- installing the casing (200) into the structure (100);
- connecting the first part (511) and the second part (512) of the electric connector (510);
- connecting the first part (521, 531) and the second part (522, 532) of the fluidic connector (520, 530);
- adjusting the circularity of the laser beam by means of the circularity correction module (620) and/or adjusting the astigmatism of the laser beam by means of the astigmatism correction module (630).

13. Method according to claim 12, further comprising a step of performing a measurement, after the laser beam being shaped by the optical unit (600), of the astigmatism and/or the circularity of the laser beam, and wherein adjusting the circularity of the laser beam and/or adjusting the astigmatism of the laser beam is respectively performed based on the measurement.

14. Method according to claim 13, wherein installing the casing (200) into the structure (100) comprises lifting the casing (200) by means of a lifting tool, placing the casing (200) onto a drawer (300), and sliding the drawer (300) into the structure (100).
